# EUROPEAN PATENT SPECIFICATION

(11) **EP 2 816 717 B1**
(45) Date of publication and mention of the grant of the patent: **10.10.2018**
(21) Application number: 14168537.0
(22) Date of filing: 15.05.2014
(51) Int. Cl.: H02M 7/48, B60L 11/18, H02M 7/00

(54) **Electric power conversion system equipped with electric storage device**
Leistungsumwandlungssystem mit elektrischer Speichervorrichtung
Système de conversion d'énergie électrique équipé d'un dispositif de stockage électrique

(30) Priority: 21.06.2013 JP 2013130383
(43) Date of publication of application: 24.12.2014
(73) Proprietor: Hitachi, Ltd., Tokyo 100-8280 (JP)
(72) Inventor: Shinomiya, Takeshi, Tokyo 100-8280 (JP); Nakamura, Yasushi, Tokyo 100-8280 (JP); Ayata, Masataka, Tokyo 100-8280 (JP); Sugiura, Tetsu, Tokyo 100-8280 (JP); Nakata, Kiyoshi, Tokyo 100-8280 (JP)
(74) Representative: Gill, Stephen Charles

(56) References cited:
- EP-A2- 2 556 980
- JP-A- 2009 089 503
- JP-A- 2013 085 395
- US-A1- 2012 039 100
- US-A1- 2012 300 521

## Description

### BACKGROUND OF THE INVENTION

### Field of the Invention

The present invention relates to a system configuration of an electric power conversion system equipped with an electric storage device, and more particularly, to a method for configuring the electric power conversion system including an inverter device which converts direct current (DC) into alternating current (AC), a DC-DC converting device which is connected in parallel to the inverter device and which converts a first DC voltage into a second DC voltage, and the electric power storage device.

### Description of the Related Art

In inverter devices which are widely used in industry, a scheme for converting DC power into AC power by way of Variable Voltage Variable Frequency (VVVF) control using a Pulse Width Modulation (PWM) scheme is widely utilized.

For example, in the field of rail vehicles, regenerative braking control is widely used in which while an electric motor is driven using a WVF inverter device to thereby accelerate the vehicle, the electric motor is made to operate as an electric generator upon braking to thereby convert kinetic energy into electric energy and return the electric energy to an overhead contact line (hereinafter, referred to as a "line").

Further, in recent years, a technique of effectively utilizing regenerative electric power obtained by a regenerative brake by applying the electric storage device to realize further energy saving has been studied and put into practical use.

For example, Japanese Patent Laid-Open Publication No. 2012-186947 (Patent Document 1) and Japanese Patent Laid-Open Publication No. 2009-89503 (Patent Document 2) cited as prior art documents disclose a technique of driving a vehicle with high efficiency by connecting an electric storage device in parallel to an input side of an inverter device and storing and effectively utilizing regenerative energy.

An electric power conversion system disclosed in the above Japanese Patent Laid-Open Publication No. 2012-186947 (Patent Document 1) is shown in FIG. 6 as prior art.

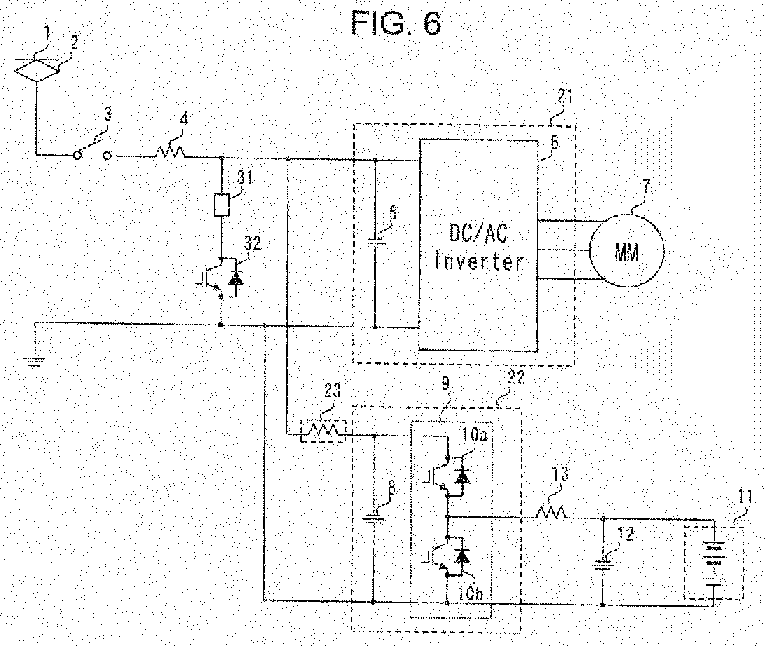

FIG. 6 shows a DC contact line 1, a power collector 2, a contactor 3, a reactor 4, capacitors 5 and 8, an inverter circuit 6, an electric motor 7, a DC-DC converting circuit 9, an electric storage device 11, an inverter circuit unit 21, a DC-DC converting circuit unit 22, a resistor 31 and a switching element 32.

The inverter circuit 6 and the DC-DC converting circuit 9 are typically configured with switching elements using power semiconductor devices. In power conversion using a PWM scheme, when DC power is converted into AC power by way of switching operation of the switching elements, while harmonic distortion occurs upon the power conversion, this harmonic distortion is prevented from flowing into the DC contact line 1 by a configuration in which the harmonic distortion due to the inverter circuit 6 is absorbed at a filter circuit configured with the reactor 4 and the capacitor 5 and the harmonic distortion due to the DC-DC converting circuit 9 is absorbed at a filter circuit configured with the reactor 4 and the capacitor 8. Further, the resistor 31 and the switching element 32 configure a discharge circuit for discharging an electric charge of the capacitors.

During power running which accelerates the vehicle, the electric power conversion system receives input of DC power from the DC contact line 1 through the power collector 2, supplies power to the inverter circuit 6 via a contactor 3, the reactor 4 and the capacitor 5, and converts the DC power into three-phase AC power at the inverter circuit 6 to thereby drive the electric motor 7 and accelerate the vehicle.

Further, during regenerative braking which deaccelerates the vehicle, the regenerative power which is generated by the electric motor and returned to the DC contact line through the same path as that used upon power running, is used as power for power running of other vehicles on the same line. Even when there are insufficient trains performing power running on the same line during the regenerative braking, the electric power conversion system is configured so as to be able to reduce the number of times regeneration is cancelled, that is, all the regenerative power cannot be returned, and so as to be able to effectively utilize power by continuously operating the regenerative brake by absorbing the regenerative power generated by the electric motor 7 at the electric storage device 11. In this case, the regenerative power from the electric motor 7 is stored in the electric storage device 11 via the inverter circuit 6, the capacitor 5, the capacitor 8 and the DC-DC converting circuit 9. The power stored in the electric storage device 11 is controlled by the DC-DC converting circuit 9.

Further, the power stored in the electric storage device 11 which is discharged through the same path as that used when the electric storage device 11 is charged, is used as power for accelerating a vehicle during power running, and also can be used as power for urgently running a vehicle to the station when the DC contact line 1 cannot receive power supply due to power outage, or the like.

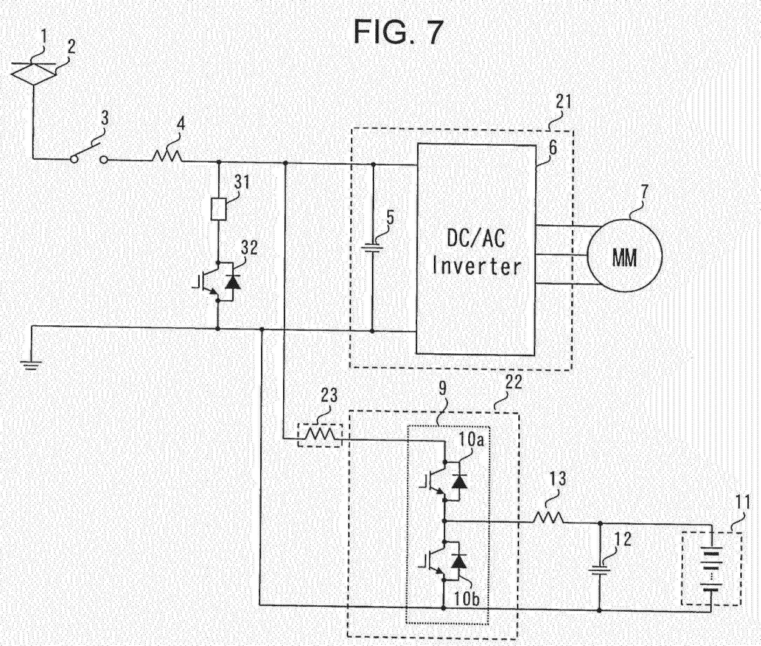

Japanese Patent Laid-Open Publication No. 2009-89503 (Patent Document 2) cited as the prior art document discloses a configuration as shown in FIG. 7, in which a capacitor (corresponding to the capacitor 8 shown in FIG. 6) is not connected in parallel to a DC input unit at a side where a DC-DC converting circuit 9 is connected to an inverter circuit 6, and a capacitor 5 connected in parallel to the input unit of the inverter circuit 6 is shared. In this configuration, as will be described later, there is a problem that due to influence of wiring inductance 23 between the inverter circuit 6 and the DC-DC converting circuit 9, a surge voltage of a switching element 10 of the DC-DC converting circuit 9 becomes excessive.

Further, while Japanese Patent Laid-Open Publication No. 2008-199788 (Patent Document 3) cited as the prior art document discloses a configuration in which a capacitor of a DC-DC converting circuit is shared with an inverter circuit as with the configuration disclosed in Japanese Patent Laid-Open Publication No. 2009-89503 (Patent Document 2), it is necessary to divide a bus bar in order to prevent a surge voltage of a switching element from being superimposed on a power supply voltage. Further, there is a problem that because distance to an extraction position of a power supply electrode differs between phases, inductance of the circuit differs between the phases, which may lead to influence on the surge voltage upon switching and may lead to current unbalance between the phases.

JP 2009 089503 A proposes a vehicle controller including a chopper device and storage device on the DC side of an inverter device, and a discharge control means. US 2012/300521 proposes a power converter.

### SUMMARY OF THE INVENTION

The circuits disclosed in the Patent Documents cited as the prior art documents include three main problems as described below.

The first problem is that because, typically, an electric wire is used for connection between the inverter circuit and the DC-DC converting circuit, which is connection between the units, there is a possibility in the configuration disclosed in Japanese Patent Laid-Open Publication No. 2012-186947 (Patent Document 1), that a resonance phenomenon may occur between the wiring inductance of the electric wire which connects the inverter circuit and the DC-DC converting circuit and the capacitor which is connected in parallel to the DC-DC converting circuit. Particularly, because the capacitance of the capacitors used in rail vehicles falls within the order of several thousands µ F, if the inverter circuit is connected to the DC-DC converting circuit using the electric wire, there is a case where a resonance frequency determined by electrostatic capacitance of the capacitors and inductance of the wiring (electric wire) may approach switching operation frequencies of the inverter and the DC-DC converting circuit, and a current and a voltage of a DC unit which connects the inverter circuit and the DC-DC converting circuit may resonate. If the resonance operation occurs, there is a possibility that overcurrent and overvoltage may occur at a DC stage and that overcurrent occurs at an output side of the inverter circuit or the DC-DC converting circuit.

Meanwhile, if a configuration as disclosed in Japanese Patent Laid-Open Publication No. 2009-89503 (Patent Document 2) is employed in which a capacitor to be connected in parallel in the immediate vicinity is not provided at a DC unit at a side where the DC-DC converting circuit is connected to the inverter circuit, a surge voltage generated upon switching of the DC-DC converting circuit becomes excessive due to influence of the wiring inductance, which may be likely to destroy a switching element of the DC-DC converting circuit. Accordingly, when the inverter circuit is connected to the DC-DC converting circuit via the electric wire using separate units, it is difficult to eliminate the capacitor connected in parallel to the DC-DC converting circuit.

Further, if a configuration as disclosed in Japanese Patent Laid-Open Publication No. 2008-199788 (Patent Document 3) is employed in which the bus bar is divided, the wiring inductance increases due to influence of a length of wiring from the bus bar to the capacitor, and in arrangement of the switching elements as disclosed in this Patent Document, because distance to the extraction position of the power supply electrode differs between the phases, the inductance of the circuit differs between the phases, which may lead to unbalance of the surge voltage and a load current upon switching between the phases.

The second problem is that because the capacitor in the electric power conversion system has large capacitance and weight, it is not desirable to make the capacitor larger by, for example, increasing the number of capacitors unnecessarily because of limitation of outfitting under the floor of the vehicle. Further, while the switching element is implemented on a cooler for cooling heat generated by the switching operation, separately providing coolers for two units: a cooler on which the switching element for the inverter is implemented; and a cooler on which the DC-DC converting circuit is implemented, may incur increase in size of the apparatus and is therefore not preferable. Therefore, it is desirable to share devices at a portion where the number of devices can be reduced and devices can be shared.

The third problem is that in terms of control operation, if capacitors are separately provided for the inverter circuit and the DC-DC converting circuit to detect voltages and perform control operation, a difference occurs in the voltage values of the capacitors. Further, if sensors are separately provided, a difference occurs in detected voltage values due to influence of detection errors of the sensors. Still further, even if a capacitor is shared between the inverter circuit and the DC-DC converting circuit and a voltage is detected to perform control operation, if wiring between the inverter circuit and the DC-DC converting circuit is long, a difference may occur in the capacitor voltages detected at the respective circuits. Such a difference in the capacitor voltages may cause a problem in the control operation.

For example, in the configuration of Japanese Patent Laid-Open Publication No. 2012-186947 (Patent Document 1) and Japanese Patent Laid-Open Publication No. 2009-89503 (Patent Document 2), by enabling output wiring of a phase of a switching signal and each phase of the main circuit to be switched between each phase of the inverter circuit and a phase of the DC-DC converting circuit, it is possible to realize redundancy so as to enable the vehicle to continuously run by using the phase of the DC-DC converting circuit as a substitute for one phase of the inverter when, for example, one phase of the inverter circuit has failed. However, also in this case, as described above, a difference in the capacitor voltages may become a factor of inductive interference due to unbalance of output control voltages of the inverter between the phases or a factor of torque fluctuation when an electric motor serves as an inverter load.

Further, when a scheme is employed in which an external power supply facility is provided to charge an electric storage device, there is a case where charging efficiency may deteriorate or it may be difficult to provide stable control.

To solve the above-described problems, the present invention provides an electric power conversion system according to claim 1.

Further, in order to reduce the wiring inductance, it is preferable that the first electric power converting means, the second electric power converting means and the first capacitor are configured within the same unit using a bus bar configuration, the first capacitor and the first and the second electric power converting means are connected through the shortest path using the bus bar, and a bus bar for a positive power supply overlaps with a bus bar for a negative power supply at constant distance while insulation is ensured.

Further, it is possible to provide a discharge circuit configured with a series circuit of switch means and the resistor connected in parallel to the first capacitor within the same unit.

Still further, it is also possible to provide a switch which switches and connects between the AC load and an external power supply facility at the AC side of the first electric power converting means, and, when the external power supply facility is connected to the AC side of the first electric power converting means by way of switching of the switch, charge the electric storage means with power supplied from the external power supply facility via the first electric power converting means and the second electric power converting means.

According to the present invention, it is possible to prevent a resonance phenomenon of a DC unit to which the inverter circuit and the DC-DC converting circuit are connected in parallel.

Further, by employing a configuration so as to reduce wiring inductance between the inverter circuit and the DC-DC converting circuit, it is possible to suppress a surge voltage upon operation of a switching element and reduce unbalance between phases.

Still further, the size of devices of an overall system can be economically reduced by reducing the number of capacitors and reducing the size of the cooler. Further, by sharing the capacitor, it is possible to prevent unbalance of a control voltage of the inverter between phases even during emergency operation upon failure, so that it is possible to provide a reliable system.

### BRIEF DESCRIPTION OF THE DRAWINGS

FIG. 1 shows a configuration example of a main circuit of an electric power conversion system according to Comparative Example 1;
FIG. 2 shows an example of an apparatus configuration of an integrated unit shown in FIG. 1;
FIG. 3 shows a configuration example of a main circuit of an electric power conversion system according to an Embodiment of the present invention;
FIG. 4 shows a configuration example of main circuit of an electric power conversion system according to Comparative Example 2;
FIG. 5 shows a configuration example of a main circuit of an electric power conversion system according to Comparative Example 3.
FIG. 6 shows a configuration example of a main circuit of a conventional electric power conversion system; and
FIG. 7 shows another configuration example of a main circuit of a conventional electric power conversion system.

### DETAILED DESCRIPTION OF THE PREFERRED EMBODIMENTS

An Embodiment of the present invention will be described below with reference to the drawings.

### [Comparative Example 1]

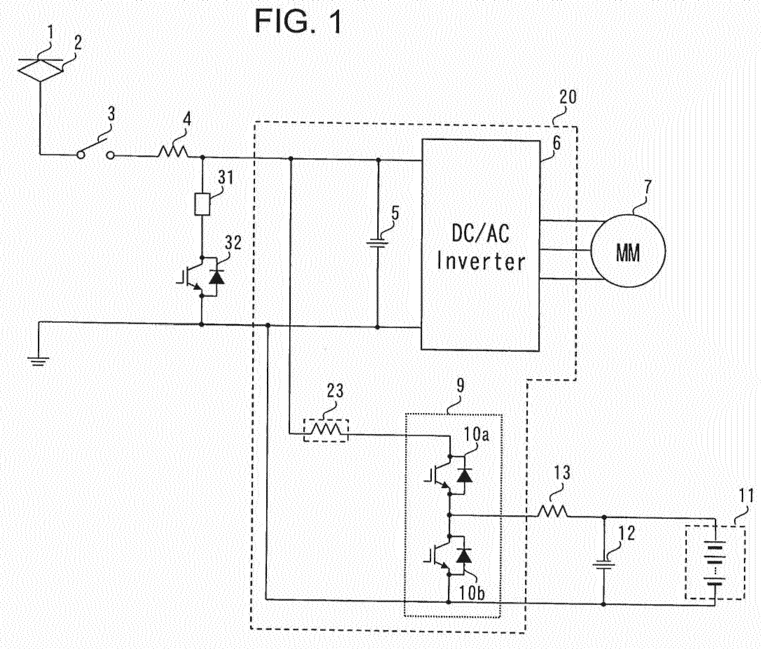

FIG. 1 shows a configuration example of a main circuit of an electric power conversion system according to Comparative Example 1.

The electric power conversion system shown in FIG. 1 includes a DC contact line 1, a power collector 2, a contactor 3, a reactor 4, a unit 20 in which an inverter circuit 6 and a DC-DC converting circuit 9 are integrally configured, an electric motor 7, an electric storage device 11, a capacitor 12 which is connected in parallel to the electric storage device 11, and a reactor 13. The unit 20 in which the inverter circuit 6 and the DC-DC converting circuit 9 (part which is surrounded by a dotted line in FIG. 1) are integrally configured includes a capacitor 5 and switching elements 10a and 10b for performing DC-DC conversion. Further, FIG. 1 shows inductance included in wiring between the inverter circuit 6 and the DC-DC converting circuit 9 as wiring inductance 23. A resistor 31 and a switching element 32 configure a discharge circuit for discharging an electric charge from the capacitor 5 and the capacitor 12.

As an operation example in FIG. 1, a case where a vehicle is deaccelerated using a regenerative brake will be described.

Regenerative power generated from the electric motor 7 by the regenerative brake is output from the power collector 2 to the DC contact line 1 via the inverter circuit 6, the capacitor 5, the reactor 4 and the contactor 3. However, for example, when a substation cannot absorb the regenerative power or when the regenerative power cannot be consumed because no power running vehicle exists on the same track, the regenerative power from the inverter circuit 6 and the capacitor 5 is stored in the electric storage device 11 via the DC-DC converting circuit 9, the reactor 13 and the capacitor 12.

Meanwhile, during power running while the vehicle performs acceleration operation, power for the power running is supplied from the DC contact line 1 to the capacitor 5 and the inverter circuit 6 via the power collector 2, the contactor 3 and the reactor 4 to drive the electric motor 7. Further, at the same time, power for power running is discharged from the electric storage device 11 and supplied to the capacitor 5 and the inverter circuit 6 via the capacitor 12, the reactor 13 and the DC-DC converting circuit 9.

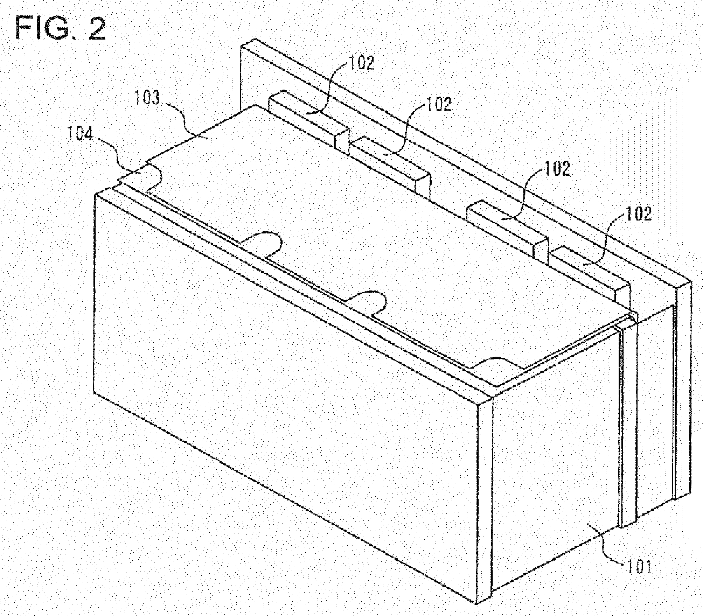

In the circuit shown in FIG. 1, by configuring the inverter circuit 6 including the capacitor 5 and the DC-DC converting circuit 9 within an integrated unit 20 (a portion surrounded by a dotted line in FIG. 1), it is possible to shorten wiring between the inverter circuit 6 and the DC-DC converting circuit 9, so that it is possible to reduce the wiring inductance 23 included in the wiring between the inverter circuit 6 and the DC-DC converting circuit 9. An example of an apparatus configuration of the integrated unit 20 for reducing the wiring inductance 23 is shown in FIG. 2.

FIG. 2 is an example of an apparatus configuration in which electric power conversion system typified by the DC-DC converting circuit 9 and the inverter circuit 6 are collectively and integrally configured within the same unit. FIG. 2 shows a capacitor 101 of the electric power conversion system, substrates 102 to which switching elements are attached, and bus bars 103 and 104. The capacitor 101 in FIG. 2 corresponds to the capacitor 5 in FIG. 1, the switching elements attached to the substrates 102 in FIG. 2 correspond to the switching elements 10a and 10b configuring the DC-DC converting circuit 9 and the switching elements configuring the inverter circuit 6 in FIG. 1. FIG. 2 shows a configuration example in which these capacitor and switching elements are connected through wiring using the bus bar to configure the integrated unit 20.

As shown in FIG. 2, a configuration is employed in which the capacitor 101 and the substrates 102 to which the switching elements are attached are arranged in the immediate vicinity, the capacitor 101 and the substrates 102 are connected through the shortest path using the bus bars, and a bus bar 103 for a positive electrode of a power supply overlaps with a bus bar 104 for a negative electrode while insulation is ensured. With this configuration, it is possible to reduce inductance of the switching circuit including the wiring inductance 23 in FIG. 1 to the same degree as that of the inverter circuit.

By this means, it is possible to reduce the wiring inductance 23 between the inverter circuit 6 and the DC-DC converting circuit 9 and the inductance of the circuit including the switching element to several tenths to several hundredths of those in the configuration in which the inverter circuit 6 and the DC-DC converting circuit 9 are configured in separate units and are connected to each other through an electric wire. Accordingly, it is possible to set a resonance frequency by the capacitor 5 and the wiring inductance 23 to a further higher frequency than operation frequencies of the inverter circuit 6 and the DC-DC converting circuit 9
It is therefore possible to realize a sufficiently high resonance frequency of the circuit compared to the switching operation frequencies of the inverter circuit 6 and the DC-DC converting circuit 9 which perform switching operation upon regenerative braking or upon power running operation as described above, and to prevent resonance of a current and a voltage of the DC unit to which the inverter circuit 6 and the DC-DC converting circuit 9 are connected.

Further, because the inductance of the circuit is reduced, it is possible to suppress a surge voltage generated when the switching elements 10a and 10b of the DC-DC converting circuit 9 perform switching, which advantageously reduces superimposition of the surge voltage on the power supply circuit.

Further, because the wiring inductance 23 between the inverter circuit 6 and the DC-DC converting circuit 9 is reduced, the capacitors can be shared. Because the number of capacitors can be reduced and the size of the cooler can be reduced by sharing the capacitors, it is possible to economically reduce the size of the devices of an overall system.

Still further, by sharing the capacitors and sharing voltage sensors of the capacitors to perform control, for example, when a phase of the inverter has failed, a phase of the DC-DC converting circuit can operate as the one phase of the inverter. Also in this case, because an output control voltage value is shared, it is possible to prevent unbalance of the control voltage of the inverter between the phases.

### [Embodiment]

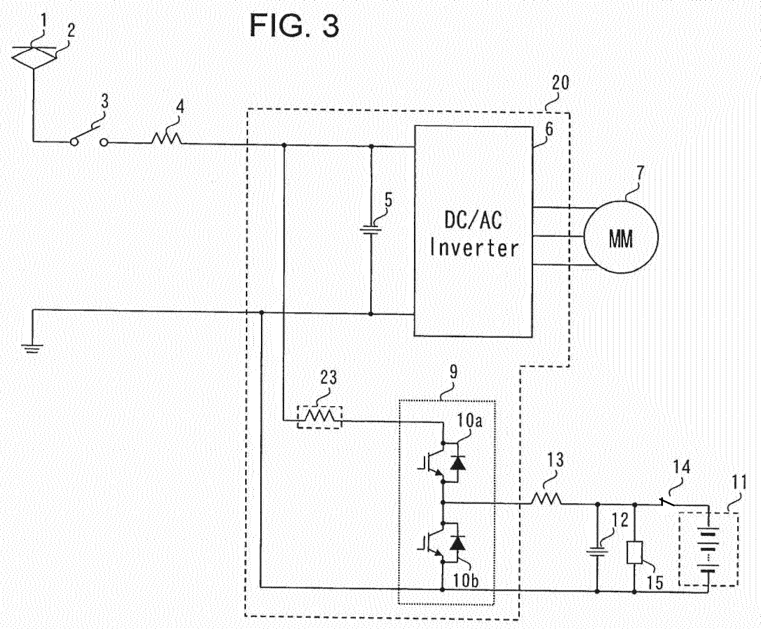

FIG. 3 shows a configuration example of a main circuit of an electric power conversion system according to an Embodiment of the present invention.

Portions of the electric power conversion system in FIG. 3, which differ from those in the configuration shown in Comparative Example 1 in FIG. 1 will be described below.

A configuration in FIG. 3 differs from the configuration in FIG. 1 in that a breaker 14 is provided in series with the electric storage device 11 at a side where the capacitor 12 is connected to the electric storage device 11, and a resistor 15 is provided in parallel to the capacitor 12. Further, a discharge circuit configured with the resistor 31 and the switching element 32 shown in FIG. 1 is omitted.

In this circuit configuration, when it is desired to discharge an electric charge from the capacitor 5 within the integrated unit 20, after the breaker 14 is opened, the switching element 10a at an upper arm side in the DC-DC converting circuit 9 is turned on. By this means, a closed circuit which passes through the capacitor 5 is configured with a path which passes through the capacitor 5, the upper arm switching element 10a in the DC-DC converting circuit 9, the reactor 13 and the resistor 15, and this closed circuit can be used as a discharge circuit of the capacitor 5.

With this circuit configuration, compared to a configuration as shown in FIG. 1 in which a discharge circuit is configured by the resistor 31 and the switching element 32 being provided between a positive electrode and a negative electrode outside of the integrated unit 20 which includes the inverter circuit 6 including the capacitor 5 and the DC-DC converting circuit 9, it is possible to omit one switching element for discharging, so that it is possible to reduce the size of the devices.

### [Comparative Example 2]

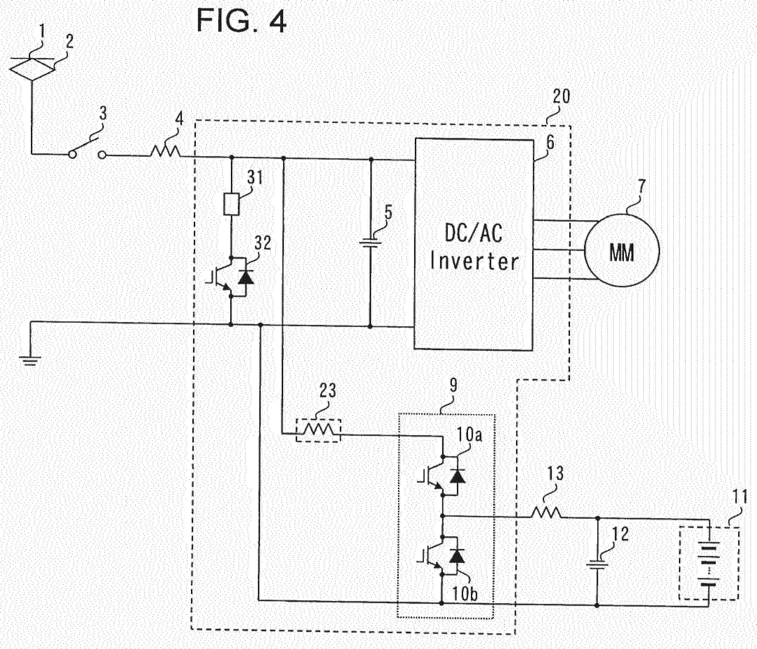

FIG. 4 shows a configuration example of a main circuit of an electric power conversion system according to Comparative Example 2.

Portions of the electric power conversion system in FIG. 4, which differ from those in the configuration shown in Comparative Example 1 in FIG. 1 will be described below.

Compared to the circuit configuration shown in FIG. 1, the configuration shown in FIG. 4 includes a series circuit of the resistor 31 and the switching element 32 in parallel with the capacitor 5 within the integrated unit 20 configured with the inverter circuit 6 including the capacitor 5 and the DC-DC converting circuit 9.

The series circuit of the resistor 31 and the switching element 32 serves as a discharge circuit for discharging an electric charge from the capacitor 5 and the capacitor 12. By implementing this discharge circuit in the integrated unit 20 in which the inverter circuit 6 including the capacitor 5 and the DC-DC converting circuit 9 are configured, the wiring inductance until this discharge circuit is reduced. It is therefore possible to discharge an electric charge from the capacitor 5 and the capacitor 12 instantaneously, so that it is possible to perform discharging operation more quickly when it is desired to discharge an electric charge instantaneously for protecting the capacitors from overvoltage.

### [Comparative Example 3]

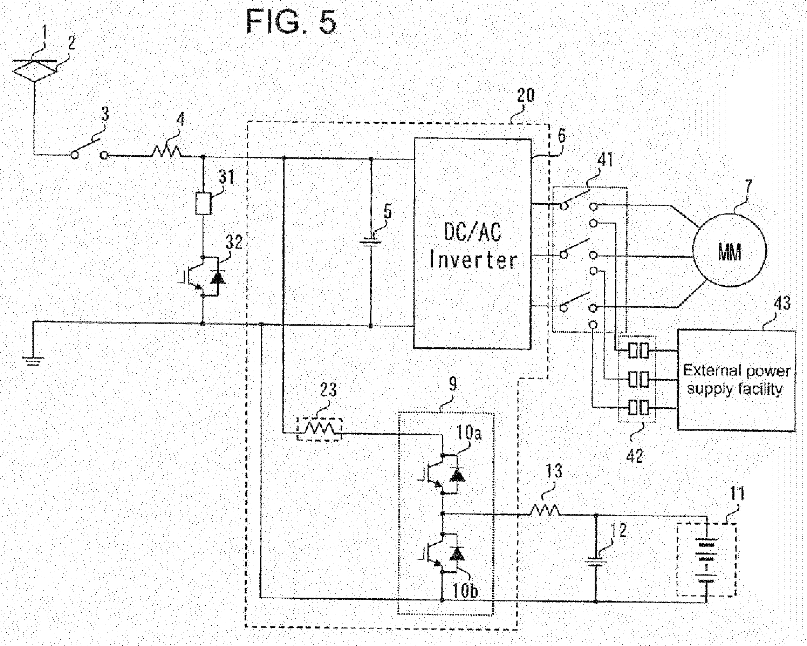

FIG. 5 shows a configuration example of a main circuit of an electric power conversion system according to Comparative Example 3.

Portions of the electric power conversion system in FIG. 5, which differ from those in the configuration shown in 1 in Comparative Example 1 in FIG. 1 will be described below.

Compared to the circuit configuration shown in FIG. 1, the configuration in FIG. 5 includes a switch 41 at a three-phase AC output side of the inverter circuit 6, and an output side of this switch 41 is connected to the electric motor 7 or the external power supply wire connecting unit 42. This external power supply wire connecting unit 42 receives power from an external power supply facility 43 provided at a station yard, a rail yard, or the like.

In this configuration, when the electric storage device 11 is charged from outside, the switch 41 is switched to a side where the external power supply facility 43 is connected, and power supplied from the external power supply facility 43 is received at the inverter circuit 6 through the external power supply wire connecting unit 42. The inverter circuit 6 converts the received three-phase AC power into DC power to charge the capacitor 5. If the DC-DC converting circuit 9 operates while the inverter circuit 6 operates to charge the capacitor 5, the electric storage device 11 can be charged.

At this time, as shown in the configuration in FIG. 5, by configuring the inverter circuit 6 including the capacitor 5 and the DC-DC converting circuit 9 within the integrated unit 20 and shortening the wiring at the connection portion of the inverter circuit 6 and the DC-DC converting circuit 9, the inductance is reduced. By sharing the capacitor 5 to which the inverter circuit 6 and the DC-DC converting circuit 9 are connected, it is possible to make a voltage value of the capacitor 5 which is detected for the inverter circuit 6 to perform charging control of the capacitor 5 equal to a voltage value of the capacitor 5 which is detected for the DC-DC converting circuit 9 to perform charging control of the electric storage device 11.

By this means, it is possible to reduce loss of power from the external power supply facility 43 to the electric storage device 11 due to charging control, and to stably control charging by reducing a control error.

## Claims

1. An electric power conversion system comprising:
first electric power converting means (6) for converting first direct current power obtained from a DC contact line (1) into alternating current power;
an alternating current load (7) which is connected to an alternating current side of the first electric power converting means;
second electric power converting means (9) for converting the first direct current power into second direct current power whose voltage level differs from a voltage level of the first direct current power;
a first capacitor (5) which is connected in common at a side where the first electric power converting means and the second electric power converting means receive the first direct current power;
electric storage means (11) for storing the second direct current power converted by the second electric power converting means;
a first reactor (13) which is provided between the second electric power converting means and the electric storage means; and being **characterised by** further comprising: a second capacitor (12) which is connected in parallel to the electric storage means,
wherein the first electric power converting means, the second electric power converting means and the first capacitor are collectively and integrally configured within the same unit (20) so as to reduce wiring inductance between the first electric power converting means and the second electric power converting means, wherein
a breaker (14) is provided between the first reactor and the electric storage means, and a series circuit of the electric storage means and the breaker is connected in parallel to the second capacitor,
a first resistor (15) is connected in parallel to the second capacitor, and the electric power conversion system is adapted to perform an electric discharge of the first capacitor by opening the breaker turning on a switching element at an upper arm side in the second electric power converting means, and using a path which passes through the second power converting means and the first resistor as a discharge circuit for the first capacitor.

2. The electric power conversion system according to claim 1, wherein the first electric power converting means, the second electric power converting means and the first capacitor are collectively and integrally configured within the same unit by way of a bus bar connection.

3. The electric power conversion system according to claim 2,
wherein the first electric power converting means, the second electric power converting means and the first capacitor are connected through the shortest path by way of the bus bar connection, and
a bus bar (103) for a positive power supply overlaps with a bus bar (104) for a negative power supply at constant distance while insulation is ensured.

4. The electric power conversion system according to any of claims 1 to 3, wherein a voltage detected at the first capacitor is shared between voltage detection of the first electric power converting means and voltage detection of the second electric power converting means.

5. The electric power conversion system according to any of claims 1 to 3,
wherein a switch (41) for switching and connecting between the alternating current load and an external power supply facility (43) is provided at the alternating current side of the first electric power converting means, wherein the electric power conversion system is adapted to when the external power supply facility is connected to the alternating current side of the first electric power converting means by way of switching of the switch, the electric storage means is charged with power supplied from the external power supply facility via the first electric power converting means and the second electric power converting means.

## Patentansprüche

1. System zur Umwandlung von elektrischer Leistung, umfassend:
ein erstes Mittel zur Umwandlung von elektrischer Leistung (6), um eine erste Gleichstromleistung, die von einer Gleichstrom-Oberleitung (1) erhalten wird, in Wechselstromleistung umzuwandeln;
eine Wechselstromlast (7), die mit einer Wechselstromseite des ersten Mittels zur Umwandlung von elektrischer Leistung verbunden ist;
ein zweites Mittel zur Umwandlung von elektrischer Leistung (9), um die erste Gleichstromleistung in eine zweite Gleichstromleistung, deren Spannungspegel sich von einem Spannungspegel der ersten Gleichstromleistung unterscheidet, umzuwandeln;
einen ersten Kondensator (5), der gemeinsam an einer Seite angeschlossen ist, an der das erste Mittel zur Umwandlung von elektrischer Leistung und das zweite Mittel zur Umwandlung von elektrischer Leistung die erste Gleichstromleistung aufnehmen;
ein elektrisches Speichermittel (11), um die zweite Gleichstromleistung, die vom zweiten Mittel zur Umwandlung von elektrischer Leistung umgewandelt wurde, zu speichern;
einen ersten Induktor (13), der zwischen dem zweiten Mittel zur Umwandlung von elektrischer Leistung und dem elektrischen Speichermittel bereitgestellt ist;
und **dadurch gekennzeichnet ist, dass** es ferner Folgendes umfasst:
einen zweiten Kondensator (12), der zum elektrischen Speichermittel parallelgeschaltet ist,
wobei das erste Mittel zur Umwandlung von elektrischer Leistung, das zweite Mittel zur Umwandlung von elektrischer Leistung und der erste Kondensator gemeinsam und einstückig in derselben Einheit (20) konfiguriert sind, um die Drahtinduktanz zwischen dem ersten Mittel zur Umwandlung von elektrischer Leistung und dem zweiten Mittel zur Umwandlung von elektrischer Leistung zu reduzieren,
wobei
ein Unterbrechungsschalter (14) zwischen dem ersten Induktor und dem elektrischen Speichermittel bereitgestellt ist, und eine Reihenschaltung des elektrischen Speichermittels und des Unterbrechungsschalters zum zweiten Kondensator parallelgeschaltet ist,
ein erster Widerstand (15) zum zweiten Kondensator parallelgeschaltet ist und
das System zur Umwandlung von elektrischer Leistung dazu geeignet ist, um eine elektrische Entladung des ersten Kondensators durchzuführen, und zwar durch
Öffnen des Unterbrechungsschalters,
Einschalten eines Schaltelements an der oberen Seite eines Zweiges im zweiten Mittel zur Umwandlung von elektrischer Leistung und
Verwenden eines Pfads als Entladungsschaltkreis für den ersten Kondensator, der durch das zweite Mittel zur Umwandlung von elektrischer Leistung und den ersten Widerstand führt.

2. System zur Umwandlung von elektrischer Leistung nach Anspruch 1, wobei das erste Mittel zur Umwandlung von elektrischer Leistung, das zweite Mittel zur Umwandlung von elektrischer Leistung und der erste Kondensator mittels einer Sammelschienenverbindung gemeinsam und einstückig innerhalb derselben Einheit konfiguriert sind.

3. System zur Umwandlung von elektrischer Leistung nach Anspruch 2, wobei
das erste Mittel zur Umwandlung von elektrischer Leistung, das zweite Mittel zur Umwandlung von elektrischer Leistung und der erste Kondensator über den kürzesten Pfad mittels der Sammelschienenverbindung verbunden sind, und
eine Sammelschiene (103) für eine positive Leistungszufuhr mit einer Sammelschiene (104) für eine negative Leistungszufuhr in einem konstanten Abstand bei sichergestellter Isolierung überlappend angeordnet ist.

4. System zur Umwandlung von elektrischer Leistung nach einem der Ansprüche 1 bis 3, wobei eine am ersten Kondensator detektierte Spannung durch eine Spannungsdetektion des ersten Mittels zur Umwandlung von elektrischer Leistung und eine Spannungsdetektion des zweiten Mittels zur Umwandlung von elektrischer Leistung gemeinsam verwendet wird.

5. System zur Umwandlung von elektrischer Leistung nach einem der Ansprüche 1 bis 3, wobei ein Schalter (41) zum Umschalten und Verbinden zwischen der Wechselstromlast und einer externen Leistungszufuhreinrichtung (43) an der Wechselstromseite des ersten Mittels zur Umwandlung von elektrischer Leistung bereitgestellt ist, wobei das System zur Umwandlung von elektrischer Leistung dazu geeignet ist, um
das elektrische Speichermittel mit Leistung aufzuladen, die über das erste Mittel zur Umwandlung von elektrischer Leistung und das zweite Mittels zur Umwandlung von elektrischer Leistung von der externen Leistungszufuhreinrichtung zugeführt wird, wenn die externe Leistungszufuhreinrichtung durch Umschalten des Schalters mit der Wechselstromseite des ersten Mittels zur Umwandlung von elektrischer Leistung verbunden ist.

## Revendications

1. Système de conversion d'énergie électrique comprenant :
des premiers moyens de conversion d'énergie électrique (6) pour convertir une première énergie en courant continu obtenue à partir d'une ligne de contact DC (1) en une énergie en courant alternatif ;
une charge de courant alternatif (7) qui est connectée à un côté de courant alternatif des premiers moyens de conversion d'énergie électrique ;
des seconds moyens de conversion d'énergie électrique (9) pour convertir la première énergie en courant continu en une seconde énergie en courant continu dont un niveau de tension diffère d'un niveau de tension de la première énergie en courant continu ;
un premier condensateur (5) qui est connecté en commun au niveau d'un côté où les premiers moyens de conversion d'énergie électrique et les seconds moyens de conversion d'énergie électrique reçoivent la première énergie en courant continu ;
des moyens de stockage électrique (11) pour stocker la seconde énergie en courant continu convertie par les seconds moyens de conversion d'énergie électrique ;
un premier réacteur (13) qui est agencé entre les seconds moyens de conversion d'énergie électrique et les moyens de stockage électrique ; et
**caractérisé en ce qu'**il comprend en outre :
un second condensateur (12) qui est connecté en parallèle aux moyens de stockage électrique,
dans lequel les premiers moyens de conversion d'énergie électrique, les seconds moyens de conversion d'énergie électrique et le premier condensateur sont configurés collectivement et intégralement dans la même unité (20) pour réduire une inductance de câblage entre les premiers moyens de conversion d'énergie électrique et les seconds moyens de conversion d'énergie électrique, dans lequel
un disjoncteur (14) est agencé entre le premier réacteur et les moyens de stockage électrique, et un circuit série constitué des moyens de stockage électrique et du disjoncteur est connecté en parallèle au second condensateur,
une première résistance (15) est connectée en parallèle au second condensateur, et le système de conversion d'énergie électrique est adapté pour effectuer une décharge électrique du premier condensateur en ouvrant le disjoncteur, en mettant en marche un élément de commutation au niveau d'un côté de bras supérieur dans les seconds moyens de conversion d'énergie électrique, et en utilisant un trajet qui traverse les seconds moyens de conversion d'énergie et la première résistance en tant que circuit de décharge pour le premier condensateur.

2. Système de conversion d'énergie électrique selon la revendication 1, dans lequel les premiers moyens de conversion d'énergie électrique, les seconds moyens de conversion d'énergie électrique et le premier condensateur sont configurés collectivement et intégralement dans la même unité au moyen d'une connexion de type barre omnibus.

3. Système de conversion d'énergie électrique selon la revendication 2,
dans lequel les premiers moyens de conversion d'énergie électrique, les seconds moyens de conversion d'énergie électrique et le premier condensateur sont connectés à travers le trajet le plus court au moyen de la connexion de type barre omnibus, et
une barre omnibus (103) pour une alimentation d'énergie positive chevauche une barre omnibus (104) pour une alimentation d'énergie négative à distance constante alors que l'isolation est assurée.

4. Système de conversion d'énergie électrique selon l'une quelconque des revendications 1 à 3, dans lequel une tension détectée au niveau du premier condensateur est partagée entre une détection de tension des premiers moyens de conversion d'énergie électrique et une détection de tension des seconds moyens de conversion d'énergie électrique.

5. Système de conversion d'énergie électrique selon l'une quelconque des revendications 1 à 3,
dans lequel un commutateur (41) pour une commutation et une connexion entre la charge de courant alternatif et une installation d'alimentation externe (43) est agencé au niveau du côté de courant alternatif des premiers moyens de conversion d'énergie électrique, dans lequel le système de conversion d'énergie électrique est adapté pour
lorsque l'installation d'alimentation externe est connectée au côté de courant alternatif des premiers moyens de conversion d'énergie électrique par une commutation du commutateur, les moyens de stockage électrique sont chargés en énergie alimentée par l'installation d'alimentation externe via les premiers moyens de conversion d'énergie électrique et les seconds moyens de conversion d'énergie électrique.
